Europäisches Patentamt

European Patent Office

Office européen des brevets

(19)

(11) Veröffentlichungsnummer: **0 302 293**

**A1**

(12) **EUROPÄISCHE PATENTANMELDUNG**

(21) Anmeldenummer: **88111546.3**

(22) Anmeldetag: **18.07.88**

(51) Int. Cl.⁴: **C02F 1/48 , B01J 39/16 , B01J 47/00 , G21F 9/12**

(30) Priorität: **29.07.87 DE 3725191**

(43) Veröffentlichungstag der Anmeldung:
**08.02.89 Patentblatt 89/06**

(84) Benannte Vertragsstaaten:
**AT BE CH DE ES FR GB IT LI NL SE**

(71) Anmelder: **Siemens Aktiengesellschaft Berlin und München**
**Wittelsbacherplatz 2**
**D-8000 München 2(DE)**

(72) Erfinder: **Martin, Joachim, Dipl.-Ing. (FH)**
**Strassberg 27**
**D-8520 Erlangen(DE)**
Erfinder: **Trummer, Karl-Heinz, Dr.**
**Hermann-Löns-Strasse 14**
**D-8523 Baiersdorf(DE)**

(54) **Verfahren zur Reinigung von Feststoffen und Flüssigkeiten.**

(57) Die Erfindung betrifft ein Verfahren zur Reinigung von Feststoffen und Flüssigkeiten. Es ist vorgesehen, daß den zu reinigenden Feststoffen oder Flüssigkeiten Stoffe beigemischt werden, die zwei unterschiedliche Substanzen enthalten. Die eine Substanz ist geeignet, die zu entfernenden Verunreinigungen an sich zu binden. Die andere Substanz hat magnetische Eigenschaften. Nachdem die Verunreinigungen an die beigemischten Stoffe gebunden sind, werden diese Stoffe mit einem Magnet aus den zu reinigenden Feststoffen oder Flüssigkeiten entfernt. Das erfindungsgemäße Verfahren eignet sich zum Reinigen von Böden und Gewässern. Bei geeigneter Auswahl des beizumischenden Stoffes werden Cäsium 137 oder organische Schadstoffe, wie Öl, aber auch Schwermetalle, wie Quecksilber, entfernt.

EP 0 302 293 A1

## Verfahren zur Reinigung von Feststoffen und Flüssigkeiten

Die Erfindung betrifft ein Verfahren zur Reinigung von Feststoffen und Flüssigkeiten. Dabei werden Fremdstoffe entfernt, die beispielsweise adsorbiert oder gelöst sind. Insbesondere werden Böden oder Wässer von radioaktiven Nukliden, organischen Schadstoffen oder Schwermetallen befreit.

Reinigungsverfahren für verunreinigte Böden sind bekannt. Vorwiegend werden Waschverfahren eingesetzt. Schwermetalle werden mit Säuren aus den Böden ausgelaugt. Zur Entfernung organischer Schadstoffe, insbesondere von Öl, werden Wäschen mit Detergenzienlösungen oder organischen Lösungsmitteln durchgeführt. Radioaktive Nuklide, die einen hohen Transferfaktor aufweisen, werden durch mehrfache Anpflanzungen und Ernten aus den Böden entfernt.

Die bekannten Reinigungsverfahren erfordern aufwendige Verfahrensschritte. Waschverfahren zur Reinigung von Böden erfordern Maßnahmen, die es gestatten, die ausgewaschenen Schadstoffe aufzufangen. Dazu muß in der Regel der Boden zur Reinigung abgetragen werden, was hohe Kosten und einen großen Zeitaufwand bewirkt. Die Entfernung radioaktiver Nuklide durch mehrmaliges Anpflanzen und Ernten ist selbst bei Verwendung schnell wachsender Pflanzen nur sehr langsam durchführbar.

Der Erfindung lag die Aufgabe zugrunde, ein Verfahren zu entwickeln, das zur Reinigung von Feststoffen und Flüssigkeiten geeignet ist und das mit einfachen Mitteln schnell und kostengünstig verschiedenartige Schadstoffe zu entfernen gestattet.

Insbesondere sollen verunreinigte Böden, aber auch Wässer gereinigt werden. Zu entfernen sind beispielsweise radioaktive Nuklide, organische Schadstoffe wie Öl, oder Schwermetalle.

Die Aufgabe wird erfindungsgemäß dadurch gelöst, daß den zu reinigenden Feststoffen oder Flüssigkeiten Stoffe beigemischt werden, die einerseits die zu entfernenden Verunreinigungen adsorbierende oder absorbierende Substanzen und andererseits magnetische Substanzen enthalten, und daß die beigemischten Stoffe, nachdem die Verunreinigungen an ihnen gebunden sind, mit einem Magnet aus den zu reinigenden Feststoffen oder Flüssigkeiten entfernt werden.

Ein wesentliches Merkmal der erfindungsgemäß zum Entfernen von Verunreinigungen beigemischten Stoffe ist, daß diese neben Substanzen, die Verunreinigungen aufnehmen, magnetische Substanzen enthalten. Damit wird der Vorteil erzielt, daß die Verunreinigungen an die erfindungsgemäß beigemischten Stoffe gebunden, auf einfache Weise mit einem Magnet aus den zu reinigenden Feststoffen oder Flüssigkeiten zu entfernen sind.

Insbesondere bei der Reinigung von Böden ist das erfindungsgemäße Verfahren vorteilhaft einsetzbar. Während bei bekannten Waschverfahren der zu reinigende Boden zunächst abgetragen und später der gereinigte Boden wieder an den ursprünglichen Ort zurückgebracht wird, kommt das erfindungsgemäße Verfahren bei guter Reinigungswirkung ohne aufwendige Erdbewegungen aus.

Gegenüber dem bekannten Verfahren zum Entfernen von Radionukliden aus dem Boden, das mehrfache Anpflanzungen und Ernten vorsieht, kommt das erfindungsgemäße Verfahren mit erheblich kürzeren Reinigungszeiten bei größerer Effektivität aus.

Zum Entfernen von Cäsium 137 aus Böden ist beispielsweise eine cäsiumspezifische Ionenaustauschersubstanz ein geeigneter Bestandteil des beizumischenden Stoffes. An ihr wird das zu entfernende Cäsium 137 gebunden. Der dem Boden beigemischte Stoff wird aufgrund seiner magnetischen Bestandteile anschließend zusammen mit den das Cäsium 137 weitgehend enthaltenden Ionenaustauschersubstanzen durch einen Magnet aus dem Boden entfernt. Damit wird der Vorteil erzielt, daß Cäsium 137 und entsprechend auch andere Radionuklide durch zwei einfache Arbeitsschritte aus Böden zu entfernen sind. Der erste Verfahrensschritt sieht das Ausstreuen des aus Ionenaustauschersubstanzen und magnetischen Substanzen bestehenden Stoffes vor. Der anschließende zweite Schritt beinhaltet nach einer geeigneten Zeitspanne für die Wechselwirkung mit dem Boden das Entfernen dieses Stoffes durch einen Magneten. Radionuklide werden mit dem erfindungsgemäßen Verfahren auf einfache Weise schnell und zuverlässig aus Böden entfernt.

Ein geeigneter dem Boden beizumischender Stoff besteht beispielsweise aus kleinen Kugeln aus Eisen oder Eisenoxid, die mit einer Schicht aus einer cäsiumspezifischen Ionenaustauschersubstanz überzogen sind.

Ein anderer geeigneter Stoff ist beispielsweise ein verpreßtes Granulat aus einem Gemisch von Eisenpulver oder Eisenoxidpulver mit einer cäsiumspezifischen Ionenaustauschersubstanz.

Eine geeignete cäsiumspezifische Ionenaustauschersubstanz ist Berlinerblau, dessen Summenformel $Fe_4 [Fe(CN)_6]_3$ ist.

Sowohl die mit einer Schicht versehenen Kugeln als auch das verpreßte Gemisch ist in großen Mengen auf einfache Weise her stellbar. Beide Stoffe sind schnell und zuverlässig mit einfachen Mitteln auf dem zu reinigenden Boden auszustreuen und sind später ebenso einfach wieder mit einem Magnet aufzunehmen. Das Granulat oder die beschichteten Kugeln, deren Schichten beispielsweise durch in makroporöse Copolymerisate polymerisiertes Styrol und Divinylbenzol fixiert sind, werden beim erfindungsgemäßen Verfahren wie Mineraldünger ausgestreut. Durch die Bodenfeuchte, insbesondere durch Regenwasser mit niedrigem pH-Wert, wird das an Huminsäuren des Bodens gebundene Cäsium in kleinen Anteilen eluiert. Aus der auf diese Weise entstandenen Lösung wird das Cäsium an den cäsiumspezifischen Ionenaustauscher gebunden. Nach ausreichend langer Zeit zur Adsorption des Cäsiums werden die beladenen Kugeln oder das beladene Granulat durch einen starken Magneten aus der aufgelockerten Erde entfernt.

Der nach der Aufnahme von Cäsium oder einem anderen Radionuklid aus dem Boden wieder entfernte beladene Stoff wird beispielsweise eluiert und ist dann wiederverwendbar. Bei hoher Beladung oder bei niedrigen Kosten für den verwendeten Stoff ist auch eine direkte Endlagerung des beladenen Stoffes sinnvoll.

Das erfindungsgemäße Verfahren ist beispielsweise auch zum Entfernen von organischen Schadstoffen, wie beispielsweise Ölen oder Chlorkohlenwasserstoffen aus Böden einsetzbar. Ein dazu geeigneter Stoff enthält neben einer magnetischen Substanz beispielweise Aktivkohle. An der Aktivkohle werden die organischen Verunreinigungen gebunden. Aufgrund der magnetischen Bestandteile des ausgestreuten Stoffes ist dieser zusammen mit den Verunreinigungen durch einen Magneten auf einfache Weise zu entfernen.

Geeignete dem Boden beizumischende Stoffe bestehen aus magnetischen Kernen, die mit einem Aktivkohlemantel umgeben sind. Beispielsweise ist der Aktivkohlemantel durch pyrolytische Kohleabscheidung gebildet. Falls erforderlich, wird die Aktivkohle vor dem Einsatz mit einer öllösenden Verbindung versetzt.

Zum Entfernen von Öl oder Chlorkohlenwasserstoffen aus Böden reichen wie beim Entfernen von Cäsium 137 zwei Verfahrensschritte aus. Nach dem Ausstreuen des Stoffes wird dieser, nachdem die Verunreinigungen gebunden sind, mit einem Magnet wieder aus dem Boden entfernt.

Der mit organischen Schadstoffen beladene Stoff ist beispielsweise einer Wiederverwendung zuführbar, indem durch Erhitzen an einem geeigneten Ort die gebundenen Schadstoffe wieder freigesetzt werden. Nach einem anderen Beispiel wird der beladene Stoff mit Lösungsmitteln versetzt, die die Schadstoffe entfernen. Mit jedem dieser Verfahrensschritte wird der Vorteil erzielt, daß die verwendeten Stoffe zum Entfernen von organischen Schadstoffen wiederverwendbar sind.

Auch andere Stoffe sind mit dem erfindungsgemäßen Verfahren aus Böden zu entfernen. Zum Entfernen von Schwermetallen wird ein Stoff verwendet, der neben einer magnetischen Substanz Kationenaustauscherharze enthält. Dieses Verfahren ist beispielsweise in der Nähe von stark befahrenen Straßen sinnvoll einsetzbar.

Zum Entfernen von Quecksilber aus Böden wird beispielsweise ein Stoff eingesetzt, der neben einer magnetischen Substanz anorganische Ionenaustauscherharze enthält. Ein geeignetes anorganisches Ionenaustauscherharz ist beispielsweise Manganoxid ($MnO_2$). Nach einem anderen Beispiel werden zum Entfernen von Quecksilber aus Böden auch organische Ionenaustauscherharze in Verbindung mit einer magnetischen Substanz eingesetzt.

Das Verfahren zum Entfernen von Quecksilber aus Böden ist beispielsweise an früheren Standorten von Holzimprägnierungsbetrieben einsetzbar.

Zum Entfernen von Schwermetallen, wie von Quecksilber aus Böden werden die gleichen Verfahrensschritte wie beim Entfernen von Radionukliden oder organischen Schadstoffen angewendet. Zunächst wird auf dem zu reinigenden Boden der geeignete Stoff ausgestreut und nachdem die zu entfernende Substanz aufgenommen worden ist, wird der ausgestreute Stoff zusammen mit den Verunreinigungen durch einen Magnet entfernt.

Ionenaustauschersubstanzen, die bedingt durch die aus Böden entfernten Substanzen mit verschiedenartigen anorganischen Schadstoffen beladen sind, sind beispielsweise durch saure oder alkalische Lösungen zu regenerieren. Die Ionenaustauschersubstanzen sind dann wiederverwendbar.

Zum Entfernen von toxischen Ionen oder organischen Schadstoffen aus Gewässern mit dem erfindungsgemäßen Verfahren, wird der beizumischende Stoff in das Gewässer gestreut. Nachdem die Verunreinigungen an den Stoff gebunden sind, wird dieser beispielsweise mit Schleppschlitten, die mit Sammelmagneten ausgestattet sind, aus dem Gewässer entfernt. Auf diese Weise sind mit einfachen Mitteln, ohne daß das zu reinigende Wasser durch eine Reinigungsanlage gepumpt werden muß, Gewässer von Verunreinigungen zu befreien. Das erfindungsgemäße Verfahren ist insbesondere zum Entfernen von Öl aus Gewässern einsetzbar.

Wie bei der Reinigung von Böden kommt das erfindungsgemäße Reinigungsverfahren bei der Reinigung von Gewässern mit nur zwei Verfahrensschritten aus. Diese Schritte sind das Ausstreuen der beizuzmischenden Stoffe und nachdem die Verunreinigungen an ihnen gebunden sind, das Entfernen der Stoffe mit Magneten.

Mit der Erfindung wird insbesondere der Vorteil erzielt, daß durch die Verwendung magnetischer Substanzen in Verbindung mit Reinigungssubstanzen verschiedenartige Schadstoffe sowohl aus Böden, als auch aus Gewässern mit einfachen technischen Mitteln schnell und weitgehend vollständig zu entfernen sind.

**Ansprüche**

1. Verfahren zur Reinigung von Feststoffen und Flüssigkeiten, **dadurch gekennzeichnet,** daß den zu reinigenden Feststoffen oder Flüssigkeiten Stoffe beigemischt werden, die einerseits die zu entfernenden Verunreinigungen adsorbierende oder absorbierende Substanzen und andererseits magnetische Substanzen enthalten, und daß die beigemischten Stoffe, nachdem die Verunreinigungen an ihnen gebunden sind, mit einem Magnet aus den zu reinigenden Feststoffen oder Flüssigkeiten entfernt werden.

2. Verfahren nach Anspruch 1 zum Entfernen von Cäsium 137 aus Böden, **dadurch gekennzeichnet,** daß ein Stoff, der einerseits cäsiumspezifische Ionenaustauschersubstanzen und andererseits eine magnetische Substanz enthält, dem Boden beigemischt wird.

3. Verfahren nach Anspruch 2, **dadurch gekennzeichnet,** daß kleine Kugeln aus Eisen oder Eisenoxid, die mit einer Schicht aus einer cäsiumspezifischen Ionenaustauschersubstanz überzogen sind, dem Boden beigemischt werden.

4. Verfahren nach Anspruch 2, **dadurch gekennzeichnet,** daß ein verpreßtes Granulat aus einem Gemisch von Eisenpulver oder Eisenoxidpulver mit einer cäsiumspezifischen Ionenaustauschersubstanz dem Boden beigemischt wird.

5. Verfahren nach den Ansprüchen 2 bis 4, **dadurch gekennzeichnet,** daß der beigemischte Stoff als cäsiumspezifische Ionenaustauschersubstanz Berlinerblau ($Fe_4[Fe(CN)_6]_3$) enthält.

6. Verfahren nach Anspruch 2, **dadurch gekennzeichnet,** daß der nach der Aufnahme von Cäsium 137 aus dem Boden entfernte Stoff eluiert wird und dadurch wiederverwendbar ist.

7. Verfahren nach Anspruch 1 zum Entfernen von organischen Schadstoffen aus Böden, **dadurch gekennzeichnet,** daß ein Stoff, der einerseits Aktivkohle und andererseits eine magnetische Substanz enthält, dem Boden beigemischt wird.

8. Verfahren nach Anspruch 7, **dadurch gekennzeichnet,** daß mit einem Aktivkohlemantel umgebene magnetische Kerne dem Boden beigemischt werden.

9. Verfahren nach Anspruch 8, **dadurch gekennzeichnet,** daß durch pyrolytische Kohleabscheidung mit einem Aktivkohlemantel umgebene magnetische Kerne dem Boden beigemischt werden.

10. Verfahren nach den Ansprüchen 7 bis 9, **dadurch gekennzeichnet,** daß die Aktivkohle mit einer öllösenden Verbindung versetzt ist.

11. Verfahren nach Anspruch 7, **dadurch gekennzeichnet,** daß der nach der Aufnahme von organischen Schadstoffen aus dem Boden entfernte Stoff erhitzt wird und dadurch wiederverwendbar ist.

12. Verfahren nach Anspruch 7, **dadurch gekennzeichnet,** daß der nach der Aufnahme von organischen Schadstoffen aus dem Boden entfernte Stoff mit mindestens einem die Schadstoffe entfernenden Lösungsmittel versetzt wird und dadurch wiederverwendbar ist.

13. Verfahren nach Anspruch 1 zum Entfernen von Schwermetallen aus Böden, **dadurch gekennzeichnet,** daß ein Stoff, der einerseits Kationenaustauscherharze und andererseits eine magnetische Substanz enthält, dem Boden beigemischt wird.

14. Verfahren nach Anspruch 1 zum Entfernen von Quecksilber aus Böden, **dadurch gekennzeichnet,** daß ein Stoff, der einerseits anorganische Ionenaustauscherharze und andererseits eine magnetische Substanz enthält, dem Boden beigemischt wird.

15. Verfahren nach Anspruch 14, **dadurch gekennzeichnet,** daß der beigemischte Stoff als anorganisches Ionenaustauscherharz Manganoxid ($MnO_2$) enthält.

16. Verfahren nach Anspruch 1 zum Entfernen von Quecksilber aus Böden, **dadurch gekennzeichnet,** daß ein Stoff, der einerseits organische Ionenaustauscherharze und andererseits eine magnetische Substanz enthält, dem Boden beigemischt wird.

17. Verfahren nach den Ansprüchen 2, 13 und 14, **dadurch gekennzeichnet,** daß die mit anorganischen Schadstoffen beladenen Ionenaustauschersubstanzen durch saure oder alkalische Lösungen regeneriert werden und dadurch wiederverwendbar sind.

18. Verfahren nach Anspruch 1 zum Entfernen von toxischen Ionen oder organischen Schadstoffen aus Gewässern, **dadurch gekennzeichnet,** daß die beigemischten Stoffe, nachdem die Verunreinigungen an ihnen gebunden sind, mit Schleppschlitten, die mit Sammelmagneten ausgestattet sind, aus den Gewässern entfernt werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 134 831 (DAWSON)<br>* Spalte 3, Zeile 60 - Spalte 6, Zeile 55; Spalten 8-10, Ansprüche *<br>--- | 1,7,12, 13,16-18 | C 02 F 1/48<br>B 01 J 39/16<br>B 01 J 47/00<br>G 21 F 9/12 |
| A | GB-A-1 115 258 (ST GOBAIN TECH. NOUV.)<br>* Seite 1, Zeilen 1-25; Seiten 8-9, Ansprüche *<br>--- | 2,5 | |
| X | US-A-3 890 224 (WEISS)<br>* Spalte 1, Zeile 1 - Spalte 10, Zeile 25 *<br>--- | 1,7,11, 12,18 | |
| A | US-A-4 201 831 (SLUSARCZUK)<br>* Spalte 5, Zeilen 7-18; Spalte 8 *<br>--- | 1,7-12 | |
| A | US-A-3 657 119 (TURBEVILLE)<br>* Spalten 5,6 *<br>--- | 1,18 | |
| A | US-A-3 723 338 (GODFREY)<br>* Spalten 4-6; Ansprüche *<br>--- | 4 | |
| A | US-A-2 479 930 (HERKENHOFF)<br>----- | | |

| | RECHERCHIERTE SACHGEBIETE (Int. Cl.4) |
|---|---|
| | C 02 F<br>B 01 J<br>G 21 F |

Der vorliegende Recherchenbericht wurde für alle Patentansprüche erstellt

| Recherchenort | Abschlußdatum der Recherche | Prüfer |
|---|---|---|
| DEN HAAG | 07-11-1988 | WENDLING J.P. |